# EUROPÄISCHE PATENTSCHRIFT

(11) **EP 2 185 248 B1**
(45) Veröffentlichungstag und Bekanntmachung des Hinweises auf die Patenterteilung: **10.04.2013**
(21) Anmeldenummer: 08785653.0
(22) Anmeldetag: 20.08.2008
(51) Int. Cl.: A62C 33/00, B65G 7/12

(54) **HANDHABUNGSKRALLE**
HANDLING CLAW
GRIFFE DE MANIPULATION

(30) Priorität: 30.08.2007 DE 202007012123 U
(43) Veröffentlichungstag der Anmeldung: 19.05.2010
(73) Patentinhaber: Fraport AG, 60547 Frankfurt am Main (DE)
(72) Erfinder: LAESE, Gregor, 65527 Niedernhausen (DE)
(74) Vertreter: Prinz & Partner
(86) Internationale Anmeldenummer: PCT/EP2008/006848
(87) Internationale Veröffentlichungsnummer: WO 2009/030371

(56) Entgegenhaltungen:
- US-A- 730 119
- US-A- 3 708 196
- US-A- 4 712 819
- US-A1- 2002 145 294
- US-A1- 2004 155 474
- US-A1- 2007 074 379
- US-B1- 6 447 033

## Beschreibung

Die Erfindung betrifft eine Handhabungskralle, die zur Handhabung von langgestreckten, rohr- oder schlauchförmigen Gegenständen dient, beispielsweise von Schiffstauen, Rohren, Leitungen und Schläuchen, insbesondere von Druckschläuchen, wie sie zur Feuerbekämpfung verwendet werden (Sieche z.B. US 6447033).

Solche rohr- oder schlauchförmigen Gegenstände können nur schwer gehandhabt werden. Sie weisen ein gewissen Biegesteifigkeit auf, und ihr Durchmesser ist so groß, daß sie mit einer Hand nicht oder nur kaum umgriffen werden können. Es ist daher schwierig, solche Gegenstände insbesondere in Längsrichtung zu ziehen, da die hierfür notwendigen Kräfte nur mit großer Mühe auf den Gegenstand übertragen werden können. Hinzu kommt, daß diese Gegenstände unter teilweise ungünstigen Bedingungen gehandhabt werden müssen, beispielsweise bei Feuchtigkeit oder Kälte, was es noch schwieriger macht, sie zu bewegen. Bei Schläuchen, die zur Brandbekämpfung verwendet werden, kommt noch der Rückstoß einer Löschdüse hinzu, der vom Feuerwehrmann/der Feuerwehrfrau abgefangen werden muß.

Die Aufgabe der Erfindung besteht darin, ein Werkzeug zu schaffen, mit dem derartige rohr- oder schlauchförmige Gegenstände leichter gehandhabt werden können.

Zur Lösung dieser Aufgabe ist erfindungsgemäß eine Handhabungskralle vorgesehen mit einem Klemmabschnitt, in dem ein rohr- oder schlauchförmiger Gegenstand eingeklemmt werden kann, und einen Griffabschnitt, an dem ein Benutzer die Handhabungskralle anfassen kann. Die Erfindung beruht auf dem Grundgedanken, einen bügelartigen Griff auf den zu bewegenden Gegenstand aufzusetzen, der sich automatisch auf diesem verklemmt und dort sicher hält, wenn an ihm gezogen wird. Die Handhabungskralle macht sich dabei die Eigenschaft der rohr- oder schlauchförmigen Gegenstände zunutze, daß sie vergleichsweise biegesteif sind.

Gemäß einer bevorzugten Ausführungsform der Erfindung weist die Handhabungskralle einen Grundkörper auf, der in einer Seitenansicht die Form eines "E" hat. Alternativ kann vorgesehen sein, daß die Handhabungskralle die Grundform eines "S" hat. Diese geometrischen Formen ermöglichen es, die Handhabungskralle in einfacher Weise bei verschiedenen Durchmessern des zu handhabenden Gegenstandes einsetzbar zu machen. Zu diesem Zweck kann vorgesehen sein, daß der Abstand von einem äußeren Bügel des Grundkörpers zum mittleren Bügel sich vom Abstand des anderen äußeren Bügels zum mittleren Bügel unterscheidet. Der zu handhabende Gegenstand wird also entsprechend seines Durchmessers immer zwischen einem der außenliegenden Bügel und dem mittleren Bügel eingeklemmt; der andere außenliegende Bügel dient dann als Griffabschnitt.

Wenn die Handhabungskralle für Druckschläuche verwendet wird, sind die Abstände zwischen den außenliegenden Bügeln und dem mittleren Abschnitt dabei vorzugsweise so bemessen, daß die beiden am häufigsten verwendeten Druckschläuche eingeklemmt werden können, nämlich zum einen ein sogenannter C-Druckschlauch und zum anderen ein sogenannter B-Druckschlauch.

Gemäß einer bevorzugten Ausführungsform der Erfindung ist vorgesehen, daß mindestens einer der Bügel des Grundkörpers mit Kunststoff, Gummi oder einem ähnlichen Material überzogen ist. Dieser Überzug erhöht die Reibung, so daß zum einen der zu handhabende Gegenstand noch zuverlässiger im Klemmabschnitt gehalten wird und zum anderen der Griffabschnitt besser vom jeweiligen Benutzer gehalten werden kann.

Gemäß einer bevorzugten Ausführungsform der Erfindung ist vorgesehen, daß die beiden äußeren Bügel jeweils leicht gekrümmt sind. Dies führt zu einer Zentrierung des zu handhabenden Gegenstands zwischen dem äußeren Bügel und dem mittleren Bügel, so daß die Handhabungskralle nicht abrutschen kann.

Gemäß einer bevorzugten Ausführungsform ist eine Befestigungsöse vorgesehen, mit der die Handhabungskralle beispielsweise an einem Werkzeug-oder Feuerwehrgurt befestigt werden kann, so daß sie im Einsatz jederzeit greifbar ist.

Vorteilhafte Ausgestaltungen der Erfindung ergeben sich aus den Unteransprüchen.

Die Erfindung wird nachfolgend anhand einer Ausführungsform beschrieben, die in den beigefügten Zeichnungen dargestellt ist. In diesen zeigen:
- Figur 1 eine Handhabungskralle in einer Seitenansicht; und
- Figur 2 eine Handhabungskralle im Einsatz.

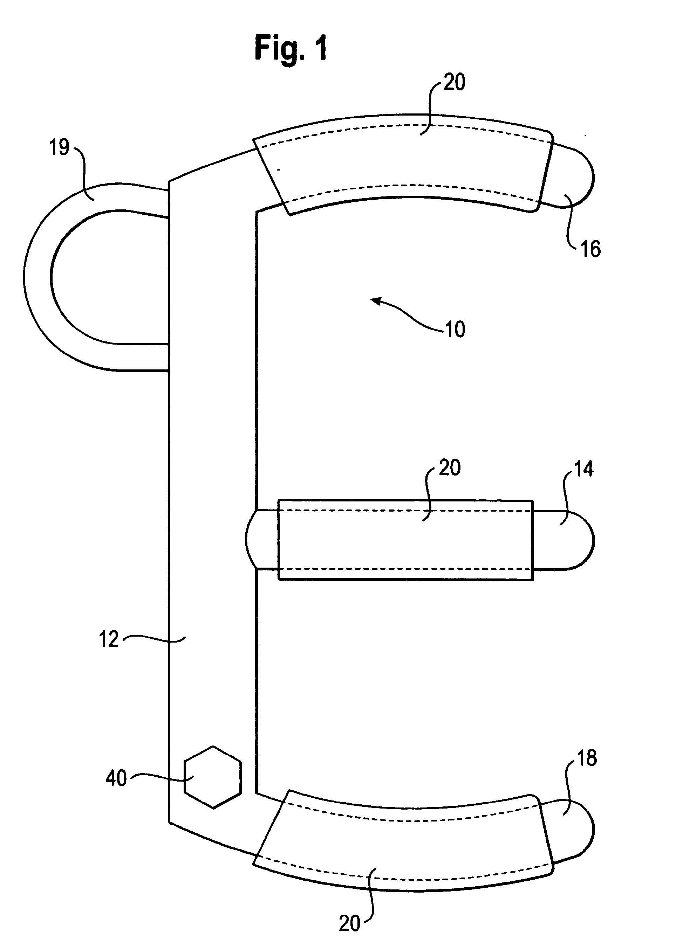

In Figur 1 ist eine Handhabungskralle 10 gezeigt, die einen E-förmigen Grundkörper aufweist. Der Grundkörper weist aufgrund seiner geometrischen Form einen Seitensteg 12, einen mittleren Bügel 14 und zwei äußere Bügel 16, 18 auf. Der Grundkörper besteht vorzugsweise aus Metall, insbesondere einer Aluminiumlegierung, und weist für den Seitensteg 12 einen Durchmesser in der Größenordnung von 20 mm und für die Bügel einen Durchmesser in der Größenordnung von 15 mm auf. Am Grundkörper ist eine Befestigungsöse 19 vorgesehen, deren Durchmesser an einen üblichen Feuerwehrgurt angepaßt ist. Weiterhin ist am Grundkörper ein Werkzeug 40 vorgesehen, hier ein Sechskant-Schlüssel, um die Handhabungskralle multifunktional einsetzen zu können. Das Werkzeug könnte nach außen vom Grundkörper abstehend angebracht werden, ähnlich der Befestigungsöse, um beispielsweise einen Sechskant-Schlüssel mit Abmessungen vorzusehen, die größer sind als der Durchmesser des Grundkörpers.

Wie in Figur 1 zu sehen ist, ist der mittlere Bügel 14 gerade ausgeführt, während die beiden äußeren Bügel 16, 18 leicht so gekrümmt sind, daß sie vom mittleren Bügel 14 aus betrachtet konkav erscheinen. Die beiden äußeren Bügel 16, 18 und der mittlere Bügel 14 sind jeweils mit einem Überzug 20 versehen, der aus Kunststoff, Gummi oder einem ähnlichen Material besteht, das einen höheren Reibungskoeffizienten als Metall hat.

Gemäß einer nicht dargestellten alternativen Ausführungsform kann der Grundkörper 10 auch eine S-förmige Gestalt haben. Auch in diesem Fall würden sich die beiden äußeren Bügel und ein mittlerer Bügel ergeben.

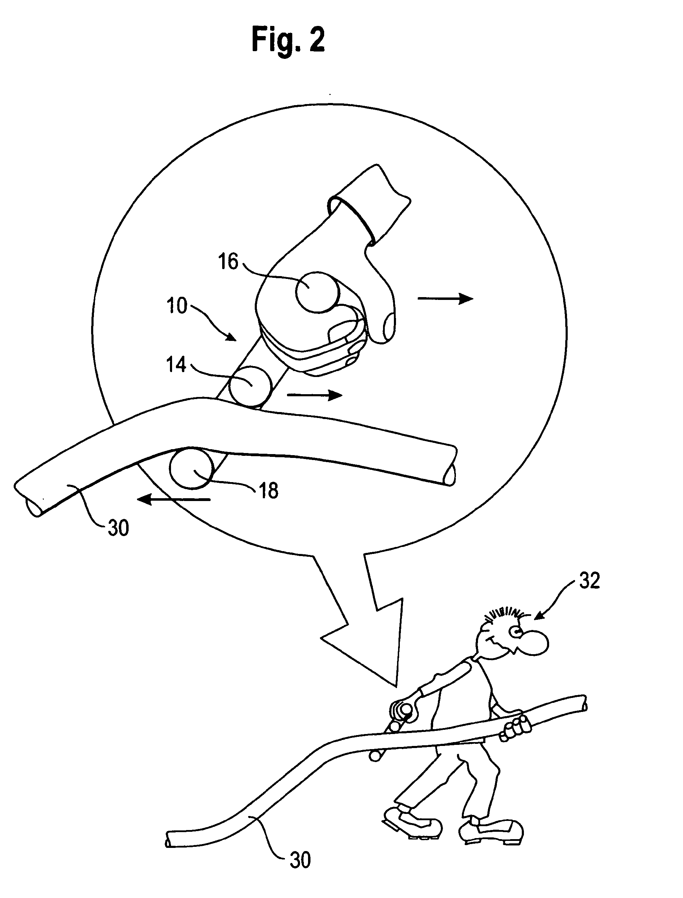

In Figur 2 ist die Handhabungskralle 10 im Einsatz gezeigt. Sie dient bei dem dargestellten Beispiel dazu, einen Druckschlauch 30 zu handhaben, der von einem Feuerwehrmann 32 benutzt wird. Der Feuerwehrmann 32 benutzt dabei den einen äußeren Bügel 16 als Griffabschnitt und klemmt den Druckschlauch 30 zwischen den mittleren Bügel 14 und dem anderen äußeren Bügel 18 ein. Sobald er am Griffabschnitt, also am äußeren Bügel 16, nach rechts (bezogen auf Figur 2) zieht, verkantet sich die Handhabungskralle auf dem Druckschlauch, so daß der andere äußere Bügel 18 und der mittlere Bügel 14 als Klemmabschnitt wirken, in welchem der Druckschlauch 30 zuverlässig eingeklemmt wird. Dies wird unterstützt durch die leichte Krümmung des äußeren Bügels und durch die Überzüge 20.

Die Handhabungskralle nutzt dabei in vorteilhafter Weise aus, daß der Druckschlauch sehr biegesteif ist, wenn in ihm das Löschwasser eingespeist wird.

Der lichte Abstand zwischen dem mittleren Bügel 14 und dem äußeren Bügel 18 kann vorzugsweise in der Größenordnung von 53 mm betragen, so daß der von den beiden Bügeln 14, 18 gebildete Klemmabschnitt an einen sogenannten C-Druckschlauch angepaßt ist. Der lichte Abstand zwischen dem äußeren Bügel 16 und dem mittleren Bügel 14 beträgt vorzugsweise in der Größenordnung von 76 mm und ist daher an einen sogenannten B-Druckschlauch angepaßt.

Wenn ein Feuerwehrmann also anstelle des C-Druckschlauchs, wie er in Figur 2 gezeigt ist, einen B-Druckschlauch mit der Handhabungskralle halten oder tragen möchte, dreht er die Handhabungskralle einfach um, so daß der äußere Bügel 18 als Griffabschnitt dient und die Bügel 14, 16 den Klemmabschnitt bilden.

Die Handhabungskralle kann allgemein für alle rohr- oder schlauchförmige Gegenstände eingesetzt werden, die eine gewisse Biegesteifigkeit aufweisen. Beispiele sind Rohre, Kabel und Leitungen, die im Strassen-, Gebäude- und Industriebau eingesetzt werden (Wasserrohre, Stromleitungen, etc.), oder Schiffstaue.

Der besondere Vorteil der Handhabungskralle liegt zum einen in ihrem besonders einfachen Aufbau und der daraus resultierenden Leichtigkeit, sie einzusetzen, und zum anderen in der Tatsache, daß sie einen gut festzuhaltenden Griff am zu handhabenden Gegenstand darstellt. Dieser Griff ist sehr viel besser zu halten als der Gegenstand selbst, so daß mittels der Handhabungskralle sehr hohe Kräfte entlang der Längsrichtung des Gegenstands aufgebracht werden können. Auf diese Weise kann ein schweres Kabel gezogen werden oder bei einem Feuerwehrschlauch gut gegen den Rückstoß einer Löschdüse gegengehalten werden.

## Patentansprüche

1. Handhabungskralle (10) mit einem Klemmabschnitt (14, 18; 14, 16), in dem ein rohr- oder schlauchförmiger Gegenstand eingeklemmt werden kann, und einem Griffabschnitt (16; 18), an dem ein Benutzer die Handhabungskralle anfassen kann, **dadurch gekennzeichnet, dass** der Abstand von einem äußeren Bügel (16) des Grundkörpers zum mittleren Bügel (14) sich vom Abstand des anderen äußeren Bügels (18) zum mittleren Bügel (14) unterscheidet, und wobei der eine Abstand so bemessen ist, dass zwischen dem entsprechenden äußeren Bügel (18) und dem mittleren Bügel (14) ein "C-Druckschlauch" eingeklemmt werden kann, und der andere Abstand so bemessen ist, dass zwischen dem anderen äußeren Bügel (16) und dem mittleren Bügel (14) ein "B-Druckschlauch" eingeklemmt werden kann.

2. Handhabungskralle nach Anspruch 1, **dadurch gekennzeichnet, dass** sie einen Grundkörper aufweist, der in einer Seitenansicht die Form eines "E" hat.

3. Handhabungskralle nach Anspruch 1, **dadurch gekennzeichnet, dass** sie einen Grundkörper aufweist, der in einer Seitenansicht die Form eines "S" hat.

4. Handhabungskralle nach einem der vorhergehenden Ansprüche, **dadurch gekennzeichnet, dass** die beiden äußeren Bügel (16, 18) leicht gekrümmt sind.

5. Handhabungskralle nach einem der vorhergehenden Ansprüche, **dadurch gekennzeichnet, dass** mindestens einer der Bügel (14, 16, 18) des Grundkörpers mit Kunststoff, Gummi oder einem ähnlichen Material überzogen ist.

6. Handhabungskralle nach einem der vorhergehenden Ansprüche, **dadurch gekennzeichnet, dass** eine Befestigungsöse (19) vorgesehen ist.

7. Handhabungskralle nach einem der vorhergehenden Ansprüche, **dadurch gekennzeichnet, dass** in den Grundkörper ein Werkzeug (40) integriert ist, beispielsweise ein Sechskant-Schlüssel.

## Claims

1. A handling claw (10) comprising a clamping section (14, 18; 14, 16) in which a tubular or hose-shaped article can be clamped, and a grip section (16; 18) by which a user can grasp the handling claw, **characterized in that** the distance from an outer bow (16) of the base body to the middle bow (14) differs from the distance of the other outer bow (18) to the middle bow (14), and one distance being dimensioned such that a "C pressure hose" can be clamped between the appropriate outer bow (18) and the middle bow (14), and the other distance being dimensioned such that a "B pressure hose" can be clamped between the other outer bow (16) and the middle bow (14).

2. The handling claw according to claim 1, **characterized in that** it includes a base body which, in a side view, has the shape of an "E".

3. The handling claw according to claim 1, **characterized in that** it includes a base body which, in a side view, has the shape of an "S".

4. The handling claw according to any of the preceding claims, **characterized in that** the two outer bows (16, 18) are slightly curved.

5. The handling claw according to any of the preceding claims, **characterized in that** at least one of the bows (14, 16, 18) of the base body is coated with a plastic, rubber or a similar material.

6. The handling claw according to any of the preceding claims, **characterized in that** provision is made for a fastening eye (19).

7. The handling claw according to any of the preceding claims, **characterized in that** a tool (40), for example a hexagon wrench, is integrated in the base body.

## Revendications

1. Griffe de manipulation (10), comportant un tronçon de serrage (14, 18 ; 14, 16) dans lequel il est possible de serrer un objet en forme de tube ou de tuyau, et un tronçon de poignée (16 ; 18) au moyen duquel un utilisateur peut saisir la griffe de manipulation, **caractérisée en ce que** la distance d'une barrette extérieure (16) du corps de base à la barrette médiane (14) se distingue de la distance de l'autre barrette extérieure (18) à la barrette médiane (14), et l'une des distances étant dimensionnée de telle sorte qu'un « tuyau de pression C » peut être serré entre la barrette extérieure (18) correspondante et la barrette médiane (14), et l'autre distance étant dimensionnée de telle sorte qu'un « tuyau de pression B » peut être serré entre l'autre barrette extérieure (16) et la barrette médiane (14).

2. Griffe de manipulation selon la revendication 1, **caractérisée en ce qu'**elle présente un corps de base qui a la forme d'un « E » dans une vue latérale.

3. Griffe de manipulation selon la revendication 1, **caractérisée en ce qu'**elle présente un corps de base qui a la forme d'un « S » dans une vue latérale.

4. Griffe de manipulation selon l'une des revendications précédentes, **caractérisée en ce que** les deux barrettes extérieures (16, 18) sont légèrement arquées.

5. Griffe de manipulation selon l'une des revendications précédentes, **caractérisée en ce qu'**au moins l'une des barrettes (14, 16, 18) du corps de base est revêtue de plastique, de caoutchouc ou d'une matière similaire.

6. Griffe de manipulation selon l'une des revendications précédentes, **caractérisée en ce qu'**il est prévu un oeillet de fixation (19).

7. Griffe de manipulation selon l'une des revendications précédentes, **caractérisée en ce qu'**un outil (40) est intégré dans le corps de base, par exemple une clé six pans.
